(19) **Europäisches Patentamt**

**European Patent Office**

**Office européen des brevets**

(11) Veröffentlichungsnummer: **0 041 158**
**B1**

(12) **EUROPÄISCHE PATENTSCHRIFT**

(45) Veröffentlichungstag der Patentschrift:
18.04.84

(21) Anmeldenummer: 81103646.6

(22) Anmeldetag: 12.05.81

(51) Int. Cl.³: **C 09 C 3/10,** C 09 C 1/36,
C 09 C 1/02, C 09 C 1/42,
D 21 H 3/78

(54) Füllstoff für Papier, Karton oder Pappe, ein Verfahren zu dessen Herstellung und Papier, Karton oder Pappe.

(30) Priorität: 02.06.80 DE 3020854

(43) Veröffentlichungstag der Anmeldung:
09.12.81 Patentblatt 81/49

(45) Bekanntmachung des Hinweises auf die Patenterteilung:
18.04.84 Patentblatt 84/16

(84) Benannte Vertragsstaaten:
AT BE CH DE FR GB IT LI NL SE

(56) Entgegenhaltungen:
FR - A - 2 147 703
FR - A - 2 339 656
US - A - 3 912 532

CHEMICAL ABSTRACTS, Band 87, Nr. 20, veröffentlicht amd 14. November 1977 Zusammenfassung Br. 152849t, Seite 22 COLUMBUS, OHIO (US) & VESTSI AKAD. NAVUK BSSR, SER KHIM. NAVUK 1977 (4), 105-8 N.L. TUTAEVA et al.: "Modification of koalin and silica by polymer grafting"

Die Akte enthält technische Angaben, die nach dem Eingang der Anmeldung eingereicht wurden und die nicht in dieser Patentschrift enthalten sind.

(73) Patentinhaber: CHEMIE LINZ AKTIENGESELLSCHAFT, St. Peter-Strasse 25, A-4020 Linz (AT)

(84) Benannte Vertragsstaaten: BE CH FR GB IT LI NL SE AT

(73) Patentinhaber: Lentia Gesellschaft mit beschränkter Haftung, Arabellastrasse 4 Postfach 81 05 08, D-8000 München 81 (DE)

(84) Benannte Vertragsstaaten: DE

(72) Erfinder: Greinecker, Herbert, Dipl.-Ing., Bahnhofstrasse 4, A-5400 Hallein (AT)
Erfinder: Stern, Gerhard, Dr. Dipl.-Ing., Lustenauerstrasse 17, A-4020 Linz (AT)

Füllstoff für Papier, Karton oder Pappe, ein Verfahren zu dessen Herstellung und Papier, Karton oder Pappe

Die Erfindung betrifft Füllstoffe für Papier, Karton oder Pappe, ein Verfahren zu deren Herstellung sowie mit Hilfe dieser Füllstoffe hergestellte Papiere, Kartone oder Pappen.

Die Verwendung mineralischer Füllstoffe bei der Herstellung von Papier, Pappe oder ähnlichen Produkten ist seit langem bekannt. Neben den Vorteilen, wie etwa Einsparung an teurer Zellulose- oder anderen Fasern, sowie besserer Opazität, Weisse, Glätte oder Bedruckbarkeit des gebildeten Papiers, bringen diese Hilfsstoffe auch nachteilige Effekte mit sich, wie beispielsweise die Verminderung der Festigkeitseigenschaften des Papiers, die durch ungleichmässige Verteilung im Blatt verursachte Zweiseitigkeit oder — bei der Papierherstellung selbst — eine verminderte Retention. Infolge dieser verminderten Retention ist es notwendig, dem Faserbrei eine wesentlich grössere Füllstoffmenge beizumischen, als dann im fertigen Papier enthalten ist. Der überschüssige, nicht von der Papierbahn zurückgehaltene Füllstoff läuft durch das Sieb und belastet das Maschinenabwasser.

Daher kann in der Praxis nicht soviel Füllstoff verwendet werden, als vom wirtschaftlichen Standpunkt aus wünschenswert wäre, und es hat nicht an Versuchen gefehlt, diesem Mangel sowie den vorher erwähnten Nachteilen abzuhelfen.

So kann z.B. nach DE-A Nr. 2115409 die Retention einer Papierstreifenrolle dadurch erhöht werden, dass Mineralteilchen, insbesondere Kalziumcarbonatteilchen, verwendet werden, die mit einer koagulierten, wasserlöslichen Verbindung, wie z.B. Stärke, überzogen sind. Das wesentliche Erfindungsziel besteht darin, die Umsetzung zwischen dem sauren Aluminiumsulfat (Alaun des Papiermachers) und dem Kalziumcarbonat, das als Füllstoff verwendet wird, zu verzögern.

Gemäss AT-B Nr. 350373 ist es vorteilhafter, die anorganischen Füllstoffteilchen, insbesondere Kalziumcarbonat, zuerst mit einer kleinen Menge positiv geladener Stärke zu überziehen, um den Teilchen ein positives Zetapotential zu verleihen und es anschliessend mit einem negativ geladenen Harz, insbesondere mit Styrol/Butadien-Copolymeren zu überziehen, wobei zu beachten ist, dass das positive Zetapotential des stärkeüberzogenen Füllstoffteilchens mit dem negativen Zetapotential des anionischen Harzes beim beschichteten Teilchen etwa Null ist. Der wesentlichste Nachteil dieses Verfahrens besteht darin, dass zwei Beschichtungsvorgänge zur Herstellung des Füllmaterials notwendig sind.

Gemäss DE-A Nr. 2746968 werden die Füllstoffteilchen mit einem dem Zellstoff möglichst ähnlichen Material, nämlich mit regenerierter Zellulose, umhüllt, so dass der Füllstoff im Papier nicht durch die geringeren Wechselwirkungskräfte Füllstoff/Zellstoff, sondern durch Zellstoff/Zellstoff-Wechselwirkungen zurückgehalten wird. Hiebei wird vor allem die Retention des Füllstoffes bei der Papierherstellung verbessert, während das fertige Papier etwa die Eigenschaften eines Papieres, das mit nicht überzogenem Füllstoff hergestellt wurde, behält und die Einsparung an Zellulosefaser nicht sehr gross ist.

Es gibt noch eine Anzahl weiterer Patent oder Patentanmeldungen, nach welchen für eine einzelne gewünschte Eigenschaft des Papieres eine gute Lösungsmöglichkeit gefunden wurde und dabei andere Gesichtspunkte nicht behandelt werden.

So kann man z.B. gemäss US-A Nr. 3912532 ein Papier mit hoher Opazität und Brillanz herstellen, indem man Ton, Kaolin od. dgl. in Wasser suspendiert, mit einem Harnstoff-Formaldehyd-Präpolymeren vermischt und das Harz auf der Oberfläche der Füllstoffpartikel polymerisiert. Der dabei resultierende Kuchen neigt offenbar zum Zusammenbacken und soll vor der Verwendung zerkleinert werden, was naturgemäss eine Schädigung der Umhüllung mit sich bringt, was für den dort geschilderten Zweck weniger Bedeutung haben dürfte.

Demgegenüber konnte ein Füllstoff gefunden werden, der gegenüber einem unbehandelten, anorganischen Füllstoff eine wesentliche erhöhte Retention in der Pulpe aufweist, die mechanischen Eigenschaften des fertigen Papiers deutlich verbessert und dabei die optischen Eigenschaften nicht nachteilig beeinflusst.

Gegenstand der vorliegenden Erfindung ist demnach ein Füllstoff für Papier, Karton oder Pappe mit guter Retention, bestehend aus einem inerten, wasserunlöslichen Kernmaterial und einem hydrophilen Überzug, dadurch gekennzeichnet, dass der hydrophile Überzug aus einem durch Vernetzung wasserunlöslich gewordenen, jedoch in Gegenwart von Wasser quellenden und klebrig werdenden Polyacrylamid mit einem Molgewicht von $10^5$ bis $10^7$ oder einem Gemisch dieses Polyacrylamids mit einem Harnstoff/Formaldehyd-Kondensationsharz besteht, und der Anteil an Harnstoff/Formaldehyd- Harz maximal 85 Gew.-% des hydrophilen Überzuges beträgt.

Der Kern des Füllstoffes ist ein feinteiliges Material, das wenig oder gar nicht wasserlöslich ist und in Weissgrad, Lichtbrechung, Korngrössenverteilung und chemischen Eigenschaften den von der Papierindustrie gestellten Anforderungen entspricht und anorganischer oder organischer Natur sein kann. Beispiele für anorganische Kernstoffe sind verschiedene Kaolinsorten, Tone (Chinaton), Gips, Titandioxid, Kalziumcarbonat (Kreide); Beispiele für organische Kernstoffe sind Harnstoff/Formaldehyd oder Melamin/Formaldehyd-Harzpigmente.

Dieser feinteilige Füllstoffkern ist mit einer hydrophilen Schicht eines Polyacrylamids mit einem Molgewicht von etwa $10^5$ bis $10^7$, das auch mit wasserlöslichen Harnstoff/Formaldehyd-Kondensationsprodukten vermischt bzw. vernetzt sein kann, überzogen. Der Überzug muss einerseits wasserunlöslich sein und auf dem inerten Kernmaterial haften und andererseits bei Zusatz von Wasser quellbar und klebrig werden, also hydrophilen Charakter besitzen. Dies wird durch weitere Vernetzung auf thermischem und chemischem Weg erreicht. Das inerte Kernmaterial wird in einer wässerigen Lösung eines Polyacrylamids oder eines Polyacrylamids und eines Harnstoff/Formaldehyd-Kondensationsproduktes suspendiert und diese Suspension durch Sprühtrocknung oder im Heissluftstrom getrocknet. Dadurch vernetzt das anfangs wasserlösliche Polymere und bildet einen auf dem Kern haftenden, in Wasser unlöslichen, jedoch hydrophilen und in Gegenwart von Wasser quellenden und klebrig werdenden Überzug. Die Vernetzung erfolgt thermisch und chemisch, wobei insbesondere bei Verwendung von Polyacrylamid allein übliche Vernetzungsmittel wie Formaldehyd, Glyoxal oder wasserlösliche N-Methylolverbindungen zugesetzt werden. Wird das Polyacrylamid in Mischung mit wasserlöslichen Harnstoff/Formaldehyd-Kondensationsprodukten verwendet, so erfolgt die chemische und thermische Vernetzung (hauptsächlich?) über die dort vorhandenen N-Methylolgruppierungen. Das Polyacrylamid kann in üblicher Weise durch anionische Gruppen, wie z.B. durch Carboxylatgruppen, die durch teilweise Verseifung des Polyacrylamids oder durch Mitpolymerisieren eines Anteiles an Methacrylsäure entstanden sind, oder durch kationische Gruppen, die durch Mitpolymerisieren von Aminogruppen aufweisenden Acryl- oder Methacrylsäureestern, wie beispielsweise den Dimethylaminoäthanolestern, die dann weiter quaternisiert werden, modifiziert sein. Mit Hilfe dieser anionischen oder kationischen Modifikationen können die für den jeweiligen Einsatzzweck des Papieres oder papierähnlichen Materials gewünschten, speziellen Eigenschaften des Füllstoffes, wie Erhöhung der Faseraffinität und Verbesserung des Dispersionsgrades, erreicht werden.

Das Molverhältnis Harnstoff/Formaldehyd bei den wasserlöslichen Harnstoff/Formaldehyd-Kondensationsprodukten kann in weiten Grenzen variieren, der Kondensationsgrad muss jedoch so gewählt werden, dass die Harze in der benötigten Menge Wassermenge noch löslich sind. Besonders bevorzugt ist ein Molverhältnis von Harnstoff/Formaldehyd von mindestens 1:1,2.

Der Anteil an Harnstoff/Formaldehyd-Kondensationsprodukten am Polymerüberzug kann in weiten Grenzen schwanken. Er beträgt jedoch maximal 85 Gew.-% des hydrophilen Überzuges. Obwohl bereits durch einen Polymerüberzug, der nur aus Polyacrylamid besteht, eine deutliche Verbesserung der Retention und der mechanischen Eigenschaften des Papieres erreicht wird, ist durch Zugabe von Harnstoff/Formaldehyd-Kondensationsprodukten, gegebenenfalls mit Vernetzern, noch eine deutliche Verbesserung zu erreichen. In solchen Fällen kann es vorkommen, dass nur ein Teil des Harnstoff/Formaldehyd-Harzes das Polyacrylamid vernetzt und der Rest in Mischung mit dem vernetzten Polyacrylamid vorliegt.

Die Verbesserung erreicht ein Optimum, das in vielen Fällen bei einem Verhältnis von Polyacrylamid — Harnstoff/Formaldehyd — von etwa 1/1 liegt und dann wieder abnimmt. Wo im einzelnen Fall das optimale Verhältnis, das von der Kettenlänge des verwendeten Polyacrylamids, der Art der Vernetzung, der Art der Harnstoff/Formaldehyd-Kondensationsprodukte, der Trocknungsart, dem Trocknungsgrad und anderen Parametern abhängt, liegt, wird im jeweiligen Versuch, und abhängig vom Verwendungszweck des Papieres, entschieden.

Die Menge des Polymerüberzuges kann in weiten Grenzen variieren, sie beträgt 0,5 bis 10 Gew.-%, bezogen auf den fertigen Füllstoff, wobei der Bereich von 1 bis 5 Gew.-% besonders bevorzugt ist. Wird ein Kernmaterial verwendet, das eine besonders grosse oder unregelmässige oder zerklüftete Oberfläche besitzt, wie z.B. Diatomeenerde, die die Durchsicht des fertigen Papiers erhöht, so wird ein grösserer Harzanteil, etwa 3 bis 10 Gew.-% gewählt, ebenso bei Füllstoffen, die für sich alleine besonders schlecht retendieren, wie das feinteilige $TiO_2$ oder Aluminiumoxidhydrat, oder solche, die chemisch nicht inert sind, wie z.B. Kalk, der durch das saure Milieu angegriffen, teilweise aufgelöst wird und dadurch den gewünschten pH-Bereich stört. Bei Kernmaterialien, deren Retention nicht so schlecht ist, findet man mit einem wesentlich geringeren Polymerüberzug, etwa von 0,5 bis 2 Gew.-%, das Auslangen. Allgemein hängt die Menge des Überzuges von der chemischen Natur des Kernmaterials, von den gewünschten Eigenschaften des Papieres oder der Pappe und damit von wirtschaftlichen Erwägungen ab.

Zur Herstellung der erfindungsgemässen Füllstoffe wird das Polymer gegebenenfalls mit den gewünschten Zusätzen, wie Vernetzern und Vernetzungskatalysatoren, wie Säuren oder säureabgebende Substanzen, in einem flüssigen Medium, vorzugsweise in Wasser gelöst, das Trägermaterial in diesem Medium vor oder nach dem Lösen des Polymers fein verteilt und anschliessend das flüssige Medium entfernt, wodurch die Vernetzung erfolgt.

Die Entfernung des flüssigen Mediums erfolgt durch Verdampfen mittels eines geeigneten Trockners, etwa eines Luftstromtrockners, um die Feststoffpartikel mit dem gewünschten Feuchtigkeitsgehalt herzustellen. Besonders bevorzugt ist ein Herstellungsverfahren, bei dem die Feststoff-Polymersuspension einer Zerstäubungstrocknung unterworfen wird. Weiter ist es auch möglich, den festen Trägerstoff nur mit der gewünschten Menge an Polymerlösung anzuteigen und den so erhaltenen, feuchten Feststoff im heissen Luftstrom zu trocknen.

Die erfindungsgemässen Füllstoffe sind gut lagerfähig und kleben nicht zusammen. Erst wenn sie in Wasser suspendiert werden, nehmen sie Wasser auf, quellen und werden klebrig, wodurch die Eigenschaften als Retentionsmittel zutage treten.

Die Anwendung der erfindungsgemässen Füllstoffe bei der Herstellung von Papier, Karton und Pappe erfolgt in der für Füllstoffe üblichen Weise und mit den üblichen Zusätzen, wie z.B. Leimungsmittel, Flockungsmittel, Schleimbekämpfungsmittel, Dispergiermittel gegen Harzschwierigkeiten, Schaumbekämpfungsmittel, die den Effekt der Füllstoffe nicht negativ beeinflussen. Die erfindungsgemässen Füllstoffe können auch in Form von Mischungen mehrerer, verschiedener erfindungsgemäss hergestellter Füllstoffe oder in Mischung mit herkömmlichen Füllstoffen verwendet werden. Nach der Zugabe des erfindungsgemässen Füllstoffes zum wässerigen Medium — in einer Vorratsbütte oder zu einem späteren Zeitpunkt der Papierherstellung — beginnt er zu quellen und wird klebrig. Der Zeitpunkt der Zugabe und damit die Verweilzeit hängt ab vom Vernetzungsgrad des Polymerüberzuges, von der Temperatur und dem Salzgehalt des Wassers und den technischen Möglichkeiten der jeweiligen Papiermaschinen. Besonders vorteilhaft ist es, den erfindungsgemässen Füllstoff erst kurz vor Ende oder nach erfolgter Mahlung zuzugeben.

In den folgenden Beispielen wird die Herstellung des erfindungsgemässen Füllstoffes, die Zunahme der Retention in Abhängigkeit von der zugesetzten Füllstoffmenge, von der chemischen Natur des Überzuges, von der Menge des Uberzugsmittels sowie der Einfluss auf mechanische und chemische Eigenschaften des Papieres dargestellt.

### Beispiel 1

1100 g Kaolin mit einem Feuchtigkeitsgehalt von ca. 10% (Haftwasser) wurden in 4,5 l Wasser und 1300 g einer 3,85%igen, wässerigen Lösung von Polyacrylamid (Molekulargewicht ca. 3 000 000) suspendiert und durch Sprühtrocknung getrocknet. Die Eingangstemperatur der Heissluft betrug 200° C, die Ausgangstemperatur 90° C. Mit dem so erhaltenen Füllstoff, der einen Polymeranteil von etwa 4,4 Gew.-% hatte, wurden nach dem Zellcheming-Standardverfahren Papierblätter hergestellt. Es wurde dazu vollgebleichter Sulfitzellstoff von 33° SR (Schopper-Riegler) eingesetzt. Die Füllstoffretention des mit Polyacrylamid überzogenen Füllstoffes gegenüber unbehandeltem ist in der folgenden Tabelle dargestellt:

| Zugesetzte Füllstoff-menge bezogen auf atro (Trockensubstanz) in der Maische | Retention (%) | |
|---|---|---|
| | unbehan-delt | behandelt |
| 10% | 37,4% | 57,6% |
| 20% | 37,2% | 53,0% |
| 30% | 32,7% | 45,5% |
| 40% | 30,5% | 43,9% |

Die Reisslänge (DIN 53112) wurde gegenüber mit unbehandeltem Kaolin behandeltem Papier beträchtlich gesteigert. Bei einem Gehalt von 5% an behandeltem Füllstoff stieg die Reisslänge von 4300 auf 4500 m und bei einem Füllstoffgehalt von 12% von 3200 auf 3800 m. Die Doppelfalzzahl (DIN 53412) konnte von 45 auf 102 erhöht werden. Die optischen Eigenschaften, wie Weisse, Opazität und Durchsicht wurden praktisch nicht verändert.

### Beispiel 2

1100 g Kaolin (10% Feuchtigkeit, Haftwasser) wurden in 1090 g Polyacrylamidlösung (Molgewicht ca. 4 500 000) nach Zugabe von 3,7 l Wasser suspendiert, dann weiter 25 g Harnstoff/Formaldehyd-Harz mit einem Verhältnis Harnstoff/Formaldehyd von 1:1,75 darin aufgelöst und die Mischung durch Sprühtrocknen getrocknet. Die Eingangstemperatur der Heissluft war 210° C, die Ausgangstemperatur 95° C.

Mit dem auf diese Weise erhaltenen Füllstoff, der einen Polymeranteil von 4,6 Gew.-% hatte, wobei im Polymeranteil etwa 1 Gew.- Teil Polyacrylamid auf einen Gew.- Teil Harnstoff/Formaldehyd-Kondensat entfiel, wurden nach der Zellcheming-Standardmethode Papierblätter hergestellt. Es wurde vollgebleichter Sulfitzellstoff (35° SR) eingesetzt; der pH-Wert wurde mit Alaun auf 5,0 eingestellt. Bei Zusatz von 20% des so hergestellten Füllstoffes (bezogen auf Zellstoff, atro) wurde eine Retention von 83,7% erreicht, gegenüber einer Retention von 56,1% bei Verwendung von unbehandeltem Kaolin.

### Beispiel 3

Um den Einfluss des Mischungsverhältnisses von Polyacrylamid und Harnstoff/Formaldehyd-Kondensat zu ermitteln, wurde Beispiel 2 wiederholt, wobei wiederum Kaolin mit 4,6% organischem Überzugsmittel versehen wurde. Überzugsmittel war

a) reines Polyacrylamid mit einem Molgewicht von 4 500 000

b) 3 Gew.-Teile Polyacrylamid, 1 Gew.-Teil Harnstoff/Formaldehyd-Kondensat

c) 1 Gew.-Teil Polyacrylamid, 3 Gew.-Teile Harnstoff/Formaldehyd-Kondensat

d) reines Harnstoff-Formaldehyd-Kondensat mit einem Verhältnis Harnstoff/Formaldehyd von 1:1,75.

Bei Bestimmung der Retention nach Beispiel 2 wurden folgende Werte erhalten:

a) 73%
b) 80,4%
c) 74%
d) 55,4%

### Beispiel 4

Um den Einfluss der Menge des Überzugsmittels darzustellen, wurde ein Vergleichsversuch mit nur 2,5% reinem Polyacrylamid mit einem Molgewicht von 4 500 000 durchgeführt. Der Versuch, der in allen anderen Punkten den Beispielen 2 und 3 entsprach, erbrachte einen Retentionswert von 69,4%.

### Beispiel 5

Aus dem Füllstoff nach Beispiel 2 und hochgemahlenem, gebleichtem Sulfitzellstoff mit einem Mahlgrad von 67° SR wurden nach der Standardmethode Blätter am Rapid-Köthen-Blattbildner gebildet, die jeweils 30% unbehandelten bzw. behandelten Kaolin enthielten. Die Messung der Reisslänge (DIN 53112) ergab für die mit dem unbehandelten Kaolin gefüllten Blätter 2361 m, für jene mit behandeltem 2985 m. Die Retention wurde mit 36,8% bzw. 69,7% bestimmt.

*Beispiel 6*

1100 g gefälltes Kalziumcarbonat wurden in 4 l Wasser und 1200 g einer 3,85%igen Lösung aus Polyacrylamid mit einem Molgewicht von 800 000 suspendiert und nach Einstellung des pH-Wertes auf 7,2 und Zusatz von 4 g 37%igem Formaldehyd im Heissluftstrom bei einer Kontakttemperatur von 110°C getrocknet, so dass ein Füllstoff mit einem Polymeranteil von 4% entstand. Bei einem Zusatz von atro 20% des behandelten Füllstoffes zu einer Maische aus gebleichtem Sulfitzellstoff mit einem Schopper-Riegler-Wert von 67 betrug die Füllstoffretention 61%. Das unbehandelte Kalziumcarbonat wurde nur zu 41% retentiert.

In einem weiteren Versuch wurde zur Teilvernetzung des Überzugsmateriales statt des Formaldehyds 1,5 g Glyoxal zugesetzt. Die mit diesem Material erhaltene Retention betrug 56%.

*Beispiel 7*

700 g handelsüblicher, organischer Füllstoff auf Basis Harnstoff/Formaldehyd (Pergopak M®) wurde in 4,5 Liter Wasser suspendiert und in dieser Suspension wurden 2000 g einer 3,85%igen Lösung von Polyacrylamid eines Molgewicht von 800 000 homogen verteilt. Nach Zusatz von 2,2 g Glyoxal wurde die Suspension im Heissluftstrom getrocknet. Mit dem erhaltenen Füllstoff mit einem Polymeranteil von 10% wurden Probeblätter hergestellt. Dazu wurde eine Mischung aus 80% vollgebleichtem, hochgemahlenem Sulfitzellstoff (66°SR) und 20% Sulfatzellstoff (54°SR) eingesetzt.

In den nach der Standardmethode hergestellten Probeblättern wurde das derart behandelte Pergopak M® zu 52% retentiert. Die Retention des unbehandelten Füllstoffes betrug dagegen nur 38%.

## Patentansprüche

1. Füllstoff für Papier, Karton oder Pappe mit guter Retention, bestehend aus einem inerten, wasserunlöslichen Kernmaterial und einem hydrophilen Überzug, dadurch gekennzeichnet, dass der hydrophile Überzug aus einem durch Vernetzung wasserunlöslich gewordenen, jedoch in Gegenwart von Wasser quellenden und klebrig werdenden Polyacrylamid mit einem Molgewicht von $10^5$ bis $10^7$ oder einem Gemisch dieses Polyacrylamids mit einem Harnstoff-Formaldehyd-Kondensationsharz besteht, und der Anteil an Harnstoff/Formaldehyd-Harz maximal 85 Gew.-% des hydrophilen Überzugs beträgt.

2. Füllstoff nach Anspruch 1, dadurch gekennzeichnet, dass das inerte Kernmaterial ein herkömmlicher Füllstoff, wie Kaolin, Ton, Gips, Titandioxid, Kalziumcarbonat, oder ein Harnstoff/Formaldehyd- oder Melamin/Formaldehyd-Harzpigment ist.

3. Füllstoff nach den Ansprüchen 1 und 2, dadurch gekennzeichnet, dass der hydrophile Überzug aus Polyacrylamid oder aus Polyacrylamid in Mischung mit Harnstoff/Formaldehyd-Kondensationsharz durch das Harnstoff/Formalde-hydarz vernetzt ist.

4. Füllstoff nach den Ansprüchen 1 und 2, dadurch gekennzeichnet, dass der hydrophile Überzug aus Polyacrylamid bzw. aus Polyacrlyamid in Mischung mit Harnstoff-Formaldehyd-Kondensationsharz durch Formaldehyd oder Glyoxal vernetzt ist.

5. Füllstoff nach den Ansprüchen 1 bis 4, dadurch gekennzeichnet, dass das Polyacrylamid ein Molgewicht von $10^6$ bis $10^7$ besitzt.

6. Füllstoff nach den Ansprüchen 1 bis 5, dadurch gekennzeichnet, dass der Anteil des hydrophilen Überzuges bezogen auf Gesamtfüllstoffmenge 0,5 bis 10 Gew.-% beträgt.

7. Verfahren zur Herstellung von Füllstoffen gemäss den Ansprüchen 1 bis 6, dadurch gekennzeichnet, dass das inerte Kernmaterial in einer wässerigen Lösung eines Polyacrylamids mit einem Molgewicht von $10^5$ bis $10^7$ oder in einer Mischung eines solchen Polyacrylamids mit wasserlöslichen Harnstoff/Formaldehyd-Kondensationsharzen bei Umgebungstemperatur suspendiert wird und diese Suspension bei einer Produkttemperatur von 70-150°C einer Sprühtrocknung oder Trocknung im Heissluftstrom in dem Masse unterworfen wird, dass der dabei auf dem Kernmaterial entstehende hydrophile Überzug durch Vernetzung wasserunlöslich wird, jedoch mit Wasser quellbar bleibt.

8. Verfahren nach Anspruch 7, dadurch gekennzeichnet, dass die Suspendierung unter Zusatz von Formaldehyd oder Glyoxal durchgeführt wird.

9. Verfahren nach den Ansprüchen 7 und 8, dadurch gekennzeichnet, dass als wasserlösliche Harnstoff/Formaldehyd-Kondensationsharze solche mit einem Molverhältnis von Harnstoff zu Formaldehyd von mindestens 1:1,2 eingesetzt wird.

10. Verfahren nach den Ansprüchen 7 bis 9, dadurch gekennzeichnet, dass die Trocknung bei einer Temperatur von 85 bis 115°C durchgeführt wird.

11. Papier, Karton oder Pappe, dadurch gekennzeichnet, dass sie einen Füllstoff gemäss den Ansprüchen 1 bis 6 enthalten.

## Revendications

1. Charge pour papier ou carton ayant un bon pouvoir de rétention, constituée par une matière formant noyau inerte insoluble dans l'eau et par un revêtement hydrophile, caractérisée en ce que le revêtement hydrophile est constitué par un polyacrylamide rendu insoluble dans l'eau par réticulation, mais gonflant et devenant collant en présence d'eau, ayant un poids moléculaire de $10^5$ à $10^7$, ou par un mélange de ce polyacrylamide avec une résine de condensation urée/formaldéhyde, la teneur en résine urée/formaldéhyde représentant au maximum 85% en poids du revêtement hydrophile.

2. Charge suivant la revendication 1, caractérisée en ce que la matière inerte formant noyau est une matière usuelle comme le kaolin, l'argile, le gypse, le bioxyde de titane, le carbonate de calcium ou bien un pigment résineux urée/formaldéhyde ou mélamine/formaldéhyde.

3. Charge suivant l'une des revendications 1 ou 2, caractérisée en ce que le revêtement hydrophile formé de polyacrylamide, ou bien de polyacrylamide en mélange avec une résine de condensation urée/formaldéhyde, est réticulé par la résine urée/formaldéhyde.

4. Charge suivant l'une des revendications 1 ou 2, caractérisée en ce que le revêtement hydrophile formé de polyacrylamide, ou bien de polyacrylamide en mélange avec une résine de condensation urée/fomaldéhyde, est réticulé par du formaldéhyde ou du glyoxal.

5. Charge suivant l'une des revendications 1 à 4, caractérisée en ce que le polyacrylamide a un poids moléculaire de $10^6$ à $10^7$.

6. Charge suivant l'une des revendications 1 à 5, caractérisée en ce que la teneur du revêtement hydrophile rapportée à la quantité totale de charge représente de 0,5 à 10% en poids.

7. Procédé pour la production de charges suivant l'une quelconque des revendications 1 à 6, caractérisé en ce qu'on met la matière inerte formant noyau en suspension dans une solution aqueuse d'un polyacrylamide ayant un poids moléculaire de $10^5$ à $10^7$, ou bien d'un mélange d'un tel polyacrylamide avec des résines de condensation urée/formaldéhyde solubles dans l'eau, à la température ambiante, et on soumet cette suspension, à une température du produit de 70 à 150°C, à un séchage par pulvérisation ou bien à un séchage dans un courant d'air chaud, à un degré tel que le revêtement hydrophile produit sur la matière formant noyau soit rendu insoluble dans l'eau par réticulation, mais puisse encore gonfler au contact de l'eau.

8. Procédé suivant la revendication 7, caractérisé en ce que la mise en suspension est assurée par addition de formaldéhyde ou de glyoxal.

9. Procédé suivant les revendications 7 et 8, caractérisé en ce qu'on utilise, comme résines de condensation urée/formaldéhyde solubles dans l'eau, des résines présentant un rapport molaire entre l'urée et le formaldéhyde d'au moins 1:1,2.

10. Procédé selon l'une des revendications 7 à 9, caractérisé en ce que le séchage est effectué à une température de 85 à 115°C.

11. Papier ou carton, caractérisé en ce qu'il renferme une charge suivant l'une des revendications 1 à 6.

**Claims**

1. A filler for paper, card or board which has a good retention and consists of an inert, water-insoluble core material and a hydrophilic coating, characterised in that the hydrophilic coating consists of a polyacrylamide which has been rendered water-insoluble by cross-linking but swells, and becomes tacky, in the presence of water, and which has a molecular weight of $10^5$ to $10^7$, or consists of a mixture of this polyacrylamide with a urea/formaldehyde condensation resin, and the urea formaldehyde resin content is at most 85% by weight of the hydrophilic coating.

2. A filler according to Claim 1, characterised in that the inert core material is a conventional filler, such as kaolin, clay, gypsum, titanium dioxide or calcium carbonate, or a urea/formaldehyde or melamine/formaldehyde resin pigment.

3. A filler according to Claims 1 and 2, characterised in that the hydrophilic coating made of polyacrylamide or polyacrylamide mixed with a urea/formaldehyde condensation resin, is crosslinked by the urea/formaldehyde resin.

4. A filler according to Claims 1 and 2, characterised in that the hydrophilic coating made of polyacrylamide or polyacrylamide mixed with a urea/formaldehyde condensation resin, is crosslinked by formaldehyde or glyoxal.

5. A filler according to Claims 1 to 4, characterised in that the polyacrylamide has a molecular weight of $10^6$ to $10^7$.

6. A filler according to Claims 1 to 5, characterised in that the proportion of the hydrophilic coating is 0.5 to 10% by weight, relative to the total amount of filler.

7. A process for the manufacture of fillers according to Claims 1 to 6, characterised in that the inert core material is suspended, at ambient temperature, in an aqueous solution of a polyacrylamide having a molecular weight of $10^5$ to $10^7$ or in a mixture of such a polyacrylamide with water-soluble urea/formaldehyde condensation resins, and this suspension is spray-dried, or dried in a stream of hot air, at a product temperature of 70-150°C, to an extent such that the hydrophilic coating thereby produced on the core material becomes water-insoluble through cross-linking but remains water-swellable.

8. A process according to Claim 7, characterised in that the suspending is effected with addition of formaldehyde or glyoxal.

9. A process according to Claims 7 and 8, characterised in that the water-soluble urea/formaldehyde condensation resin employed has a molar ratio of urea to formaldehyde of at least 1:1.2.

10. A process according to Claims 7 to 9, characterised in that the drying is carried out at a temperature of 85-115°C.

11. Paper, card or board, characterised in that it contains a filler according to Claims 1 to 6.